(19) Europäisches Patentamt
European Patent Office
Office européen des brevets

(11) Veröffentlichungsnummer: **0 068 245**
**B1**

(12) # EUROPÄISCHE PATENTSCHRIFT

(45) Veröffentlichungstag der Patentschrift: **31.10.84**

(51) Int. Cl.³: **C 09 B 33/00**, C 09 B 45/24 // D06P3/06

(21) Anmeldenummer: **82105144.8**

(22) Anmeldetag: **12.06.82**

(54) **Sulfonsäuregruppenhaltige Farbstoffe.**

(30) Priorität: **19.06.81 DE 3124172**

(43) Veröffentlichungstag der Anmeldung: **05.01.83 Patentblatt 83/1**

(45) Bekanntmachung des Hinweises auf die Patenterteilung: **31.10.84 Patentblatt 84/44**

(84) Benannte Vertragsstaaten: **CH DE FR GB IT LI**

(56) Entgegenhaltungen:
**FR - A - 980 276**
**FR - A - 1 012 664**
**US - A - 1 975 166**
**US - A - 2 080 191**
**US - A - 2 111 559**
**US - A - 2 135 433**
**US - A - 2 454 683**

(73) Patentinhaber: **BASF Aktiengesellschaft, Carl-Bosch-Strasse 38, D-6700 Ludwigshafen (DE)**

(72) Erfinder: **Bergmann, Udo, Dr., Merckstrasse 26, D-6100 Darmstadt (DE)**
Erfinder: **Hansen, Guenter, Dr., Alwin-Mittasch-Platz 8, D-6700 Ludwigshafen (DE)**
Erfinder: **Lach, Dietrich, Dr., Gartenweg 16, D-6701 Friedelsheim (DE)**
Erfinder: **Thomas, Michael, Dr., Prager Strasse 31, D-6700 Ludwigshafen (DE)**
Erfinder: **Zeidler, Georg, Mutterstadter Strasse 7, D-6701 Dannstadt-Schauernheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 068 245 B1

**Beschreibung**

Die Erfindung betrifft von Reaktivgruppen freie, zwei oder drei Sulfonsäuregruppen enthaltende Farbstoffe der allgemeinen Formel

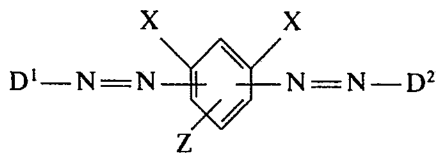

in der

$D^1$ ein Rest der Formel

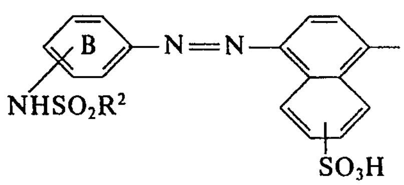

oder

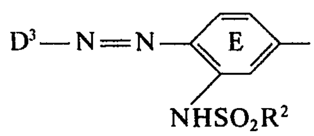

$D^2$ der Rest einer Diazokomponente, die Reste
X unabhängig voneinander Hydroxy, Amino oder substituiertes Amino und
Z Wasserstoff oder ein Rest $D^4$—N=N— sind, wobei
$D^3$ der Rest einer Diazokomponente,
$D^4$ gegebenenfalls durch Methyl, Ethyl, Methoxy, Ethoxy, Chlor, Brom, Nitro, Sulfamoyl oder Hydroxysulfonyl substituiertes Phenyl oder durch Hydroxysulfonyl substituiertes Naphthyl, und
$R^2$ ein ggf. substituierter Alkyl-, Alkenyl-, Aralkyl-, Cycloalkyl- oder aromatischer Rest oder ein substituierter Aminrest sind, und wobei die Ringe B und E noch weiter durch Methyl, Ethyl, Methoxy, Ethoxy, Chlor, Brom oder Hydroxysulfonyl substituiert sein können, mit der Maßgabe, daß $D^2$ eine zur Azobindung ortho-ständige Hydroxygruppe hat sowie die Eisen-, Mangan-, Kobalt-, Chrom-, Nickel- und Kupferkomplexe dieser Farbstoffe.

Die Reste $D^2$ und $R^3$ stammen vorzugsweise aus der Benzol- und Naphthalinreihe und können wie üblich z. B. durch Fluor, Chlor, Brom, Nitro, Cyan, substituiertes Sulfonyl, Hydroxysulfonyl, gegebenenfalls substituiertes Aminosulfonyl, Carboxyl, Carbonsäureester, Carbonsäureamid, Hydroxy, Alkyl, Alkoxy, Phenoxy, substituiertes Amino, Acylamino oder gegebenenfalls durch Chlor, Brom, Nitro oder Hydroxysulfonyl substituiertes Phenylazo substituiert sein.

Einzelne Diazokomponenten $D^2$ und $D^3$ sind beispielsweise: Anilin, o-, m-, p-Toluidin, o-, m-, p-Chloranilin, o-, m-, p-Anisidin, o-, m-, p-Nitroanilin, 2-Nitro-4-methylanilin, 3-Nitro-4-methylanilin, 2-Nitro-4-chloranilin, 2-Methyl-5-nitroanilin, 2-Methyl-4-nitroanilin, 2-Chlor-4-nitroanilin, 4-Nitroanilin-2-methylsulfon, Anilin-o-, m-, p-sulfonsäure, 2-Amino-3-chlorbenzolsulfonsäure, 2-Amino-4-chlorbenzolsulfonsäure, 2-Amino-5-chlorbenzolsulfonsäure, 3-Amino-4-chlorbenzolsulfonsäure, 2-Chlor-5-aminobenzolsulfonsäure, 3-Chlor-4-aminobenzolsulfonsäure, 4-Amino-3,6-dichlorbenzolsulfonsäure, 2-Amino-5-methylbenzolsulfonsäure, 2-Methyl-5-aminobenzolsulfonsäure, 2-Methyl-4-aminobenzolsulfonsäure, 3-Amino-4,6-dimethylbenzolsulfonsäure, 2-Amino-5-methoxybenzolsulfonsäure, 2-Methoxy-5-aminobenzolsulfonsäure, 2-Amino-4-chlor-5-methylbenzolsulfonsäure, 2-Amino-4-methyl-5-chlorbenzolsulfonsäure, 2-Amino-5-nitrobenzolsulfonsäure, 3-Nitro-4-aminobenzolsulfonsäure, Anilin-2,4- und 2,5-disulfonsäure, 2-Amino-4,5-disulfotoluol, 2-Amino-3,5-disulfochlorbenzol, 2-Amino-3,5-disulfotoluol, 2-Amino-3,5-dimethylbenzolsulfonsäure, 4-Amino-2,5-disulfoanisol, 2-Amino-4-methoxy-benzolsulfonsäure, 2-Amino-4-methoxy-6-nitro-benzolsulfonsäure, 3-Amino-6-methoxy-benzolsulfonsäure, 2-Amino-5-methoxy-benzolsulfonsäure, 2-Amino-5-äthoxy-benzolsulfonsäure, 4-Amino-diphenyläther-2-sulfonsäure, 4-Amino-diphenylamin-2-sulfonsäure, 4-Nitro-4′-aminodiphenylamin-2-sulfonsäure, 4-Nitro-3′-chlor-4′-amino-diphenylamin-2-sulfonsäure, 4-Nitro-4′-amino-diphenylamin-3′-sulfonsäure, 4-Methoxy-4′-amino-diphenylamin-2′-sulfonsäure, 4-Hydroxy-4′-amino-diphenylamin-2′-sulfonsäure, 2-Methoxy-4′-amino-diphenylamin-2′-sulfonsäure, 4-Methyl-4′-amino-diphenylamin-2′-sulfonsäure, 4′-Nitro-4-aminostilben-2,2′-disulfonsäure, 2-Amino-4-acetaminobenzolsulfonsäure, 2-Amino-5-acetaminobenzolsulfonsäure, o-, m-, p-Aminobenzoesäure sowie deren $C_1$—$C_4$-Alkylester, Anilin-3- und -4-sulfonamid, o- und p-Aminobenzonitril, Acetmetamin- und Acetparaminsäure, Gelb- und Digelbsäure, 4-Amino-azotoluol-4′-sulfonsäure, 4-Allylsulfonylanilin, 3-Allylsulfonylanilin, 2-Allylsulfonylanilin, 4-(Propenyl-1′)-sulfonylanilin, 2-Amino-5-sulfobenzoesäure, 3-Amino-6-nitrobenzoesäure, 3-Nitro-4-aminobenzoesäure, 2-Naphthylamin-1-sulfonsäure, 2-Naphthylamin-5-sulfonsäure, 2-Naphthylamin-6-sulfonsäure, 2-Naphthylamin-7-sulfonsäure, 2-Naphthylamin-8-sulfonsäure, 2-Naphthylamin-1,5-disulfonsäure, 2-Naphthylamin-3,6-disulfonsäure, 2-Naphthylamin-4,8-disulfonsäure, 2-Naphthylamin-5,7-disulfonsäure, 2-Naphthylamin-6,8-disulfonsäure, 2-Naphthylamin-6-nitro-4,8-disulfonsäure, 2-Naphthylamin-1,5,7-trisulfonsäure, 2-Naphthylamin-3,6,8-trisulfonsäure, 2-Naphthylamin-4,6,8-trisulfonsäure, 1-Naphthylamin-2-sulfonsäure, 1-Naphthylamin-3-sulfonsäure, 1-Naphthylamin-4-sulfonsäure, 1-Naphthylamin-5-sulfonsäure, 1-Naphthylamin-6-sulfonsäure, 1-Naphthylamin-7-sulfonsäure, 1-Naphthylamin-8-sulfonsäure, 1-Naphthylamin-3,6-disulfonsäure, 1-Naphthylamin-3,8-disulfonsäure, 1-Naphthylamin-4,7-disulfonsäure, 1-Naphthylamin-4,8-disulfonsäure, 1-Naphthylamin-3,6,8-trisulfonsäure, 1-Naphthylamin-4,6,8-trisulfonsäure, 2-Aminophenol, 2-Amino-4-methylphenol, 2-Amino-4-chlor-phenol, 2-Amino-4,6-dichlorphenol, 2-Amino-3,4,6-trichlorphenol, 2-Amino-4-nitrophenol, 2-Amino-5-nitrophenol, 2-Amino-4,6-dinitrophenol, 2-Amino-4-chlor-5-nitrophenol, 2-Amino-4-chlor-6-nitrophenol, 2-Amino-4-nitro-6-chlorphenol, 2-Amino-4-methyl-6-nitrophenol, 3-Amino-4-hydroxy-benzolsulfonsäure, 3-Amino-4-hydroxy-benzolsulfonsäureamid, 3-Amino-4-hydroxy-5-chlor-benzolsulfonsäure, 2-Hydroxy-3-amino-5-chlor-benzolsulfonsäure, 2-Hydroxy-3-amino-5-methyl-benzolsulfonsäure, 3-Amino-4-hydroxy-5-nitro-benzolsulfonsäure, 2-Hydroxy-3-amino-5-nitro-benzolsulfonsäure, 2-Amino-phenol-4,6-disulfonsäure, 3-Amino-4-hydroxy-5-carboxyl-benzolsulfonsäure, 2-Amino-3-naphthol, 2-Amino-3-naphthol-6-sulfonsäure, 6-Nitro-1-diazo-2-naphthol-4-sulfonsäure oder 1-Diazo-2-naphthol-4-sulfonsäure.

Substituierte Aminoreste X sind beispielsweise: Dimethylamino, Diethylamino, Dipropylamino, Morpholino, Piperidino oder Pyrrolidino.

Reste $R^2$ sind beispielsweise: Methylamino, Ethylamino, Methyl, Ethyl, n- und i-Propyl, n- und i-Butyl, $\beta$-Methoxyethyl, $\beta$-Ethoxy-ethyl, Allyl, 2-Butenyl-1, Benzyl, $\beta$-Phenylethyl, Cyclopentyl, Cyclohexyl, Phenyl, o-, m-, p-Methyl-phenyl, o-, m-, p-Chlorphenyl, o-, m-, p-Methoxyphenyl, o-, m-, p-Acetaminophenyl, Dimethylamino, Diethylamino, Dipropylamino, Methyl-ethylamino, Dibutylamino, Pyrrolidino, Piperidino, Morpholino oder N-Methylpiperazino.

Zur Herstellung der Verbindungen der Formel I kann man z. B. Diazoverbindungen von Aminen der Formel

$$D^1-NH_2$$

mit Verbindungen der Formel

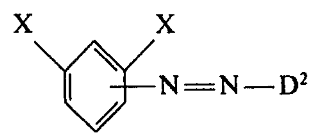

umsetzen und die Reaktionsprodukte gegebenenfalls in die Metallkomplexe überführen. Die Reaktionen sind im Prinzip bekannt und können analog zu beschriebenen Methoden vorgenommen werden. Einzelheiten der Umsetzungen können den Beispielen entnommen werden, in denen sich Angaben über Teile und Prozente, sofern nicht anders vermerkt, auf das Gewicht beziehen.

Die Verbindungen der Formel I eignen sich insbesondere in Form ihrer Metallkomplexe zum Färben von stickstoffhaltigen Fasern wie Wolle und vorzugsweise Leder. Man erhält im wesentlichen Braunnuancen mit sehr guten Echtheiten, insbesondere auch auf nachgegerbtem Leder.

Bevorzugt sind die Komplexe des Eisens.

Von besonderer technischer Bedeutung sind Verbindungen der Formel I, bei denen X = OH und $R^2$ = Alkyl oder ein Rest der Formel

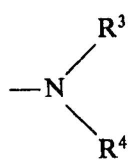

sind, wobei $R^3$ und $R^4$ $C_1$- bis $C_8$-Alkyl sind oder zusammen mit dem Stickstoffatom einen gegebenenfalls durch ein Heteroatom unterbrochenen Fünf- oder Sechsring bilden.

Bevorzugte Diazokomponenten $D^2$-$NH_2$ sind beispielsweise: 2-Amino-4,6-dinitrophenol, 3-Amino-4-hydroxy-benzolsulfonsäure, 2-Hydroxy-3-amino-5-nitro-benzolsulfonsäure, 3-Amino-4-hydroxy-5-nitro-benzolsulfonsäure, 2-Hydroxy-3-amino-5-chlorbenzolsulfonsäure, 2-Amino-phenol-4,6-disulfosäure, 1-Diazo-2-naphthol-4-sulfonsäure oder 6-Nitro-1-diazo-2-naphthol-4-sulfonsäure.

Für $D^3$-$NH_2$ sind als bevorzugt folgende Amine zu nennen: Anilin-o-, m-, p-sulfonsäure, 3-Chlor-4-amino-benzolsulfonsäure, 3-Amino-4-chlorbenzolsulfonsäure, 2-Amino-5-chlorbenzolsulfonsäure, 2-Amino-5-methyl-benzolsulfonsäure, 2-Methyl-4-aminobenzolsulfonsäure, 2-Amino-5-nitro-benzolsulfonsäure, 3-Nitro-4-amino-benzolsulfonsäure, Anilin-2,4-, und -2,5-disulfonsäure, 2-Naphthylamin-1-, 5-, 6-, 7-, 8-sulfonsäure, 2-Naphthylamin-1,5-, 3,6-, 4,8-, 5,7-, 6,8-disulfonsäure, 2-Naphthylamin-1,5,7-, 3,6,8- und 4,6,8-trisulfonsäure, 1-Naphthylamin-2-, 3-, 4-, 5-, 6-, 7-, 8-sulfonsäure,

1-Naphthylamin-3,6-, 3,7-, 3,8-, 4,7-, 4,8-disulfonsäure, 1-Naphthylamin-3,6,8-, 4,6,8-trisulfonsäure, 4-Amino-diphenylamin-2-sulfonsäure oder 4-Nitro-4'-aminodiphenylamin-2-sulfonsäure.

Besonders bevorzugte Komponenten $D^1$-$NH_2$ sind beispielsweise:

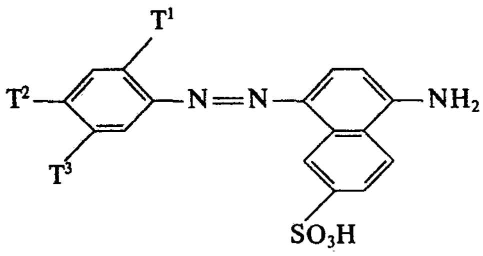

| $T^1$ | $T^2$ | $T^3$ |
|---|---|---|
| H | $NH—SO_2—CH_3$ | H |
| H | H | $NH—SO_2—CH_3$ |
| $CH_3$ | H | $NH—SO_2—CH_3$ |
| $OCH_3$ | H | $NH—SO_2—CH_3$ |
| Cl | H | $NH—SO_2—CH_3$ |
| $SO_3H$ | H | $NH—SO_2—CH_3$ |
| H | $NH—SO_2—CH_3$ | $SO_3H$ |
| H | H | $NH—SO_2—CH_2—CH=CH_2$ |
| H | 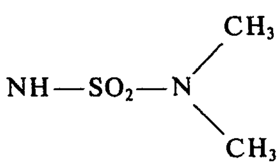 | H |
| H | 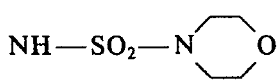 | H |
| H | H | 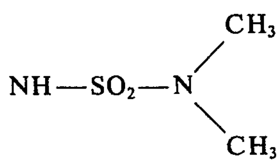 |
| H | H | 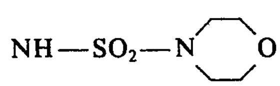 |
| H | $NH—SO_2—CH_2—CH=CH_2$ | H |

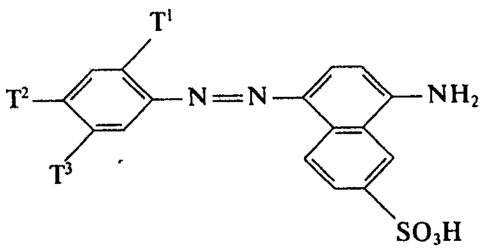

| $T^1$ | $T^2$ | $T^3$ |
|---|---|---|
| H | $NH—SO_2—CH_3$ | H |
| H | H | $NH—SO_2—CH_3$ |
| $CH_3$ | H | $NH—SO_2—CH_3$ |
| $OCH_3$ | H | $NH—SO_2—CH_3$ |
| Cl | H | $NH—SO_2—CH_3$ |
| $SO_3H$ | H | $NH—SO_2—CH_3$ |
| H | $NH—SO_2—CH_3$ | $SO_3H$ |
| H | H | $NH—SO_2—CH_2—CH{=}CH_2$ |
| H | 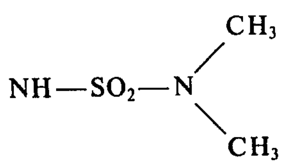 | H |
| H | 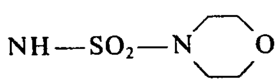 | H |
| H | H | 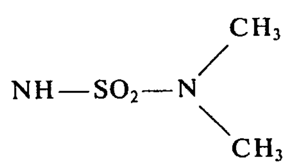 |
| H | H | 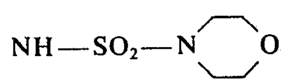 |
| H | $NH—SO_2—CH_2—CH{=}CH_2$ | H |

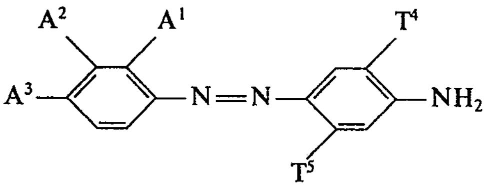

| $A^1$ | $A^2$ | $A^3$ | $T^4$ | $T^5$ |
|---|---|---|---|---|
| H | H | $SO_3H$ | H | $NHSO_2CH_3$ |
| H | $SO_3H$ | H | H | $NHSO_2CH_3$ |
| $SO_3H$ | H | H | H | $NHSO_2CH_3$ |
| $SO_3H$ | H | $NO_2$ | H | $NHSO_2CH_3$ |
| $SO_3H$ | H | $SO_3H$ | H | $NHSO_2CH_3$ |
| H | H | $SO_3H$ | $CH_3$ | $NHSO_2CH_3$ |
| H | $SO_3H$ | H | $CH_3$ | $NHSO_2CH_3$ |
| $SO_3H$ | H | H | $CH_3$ | $NHSO_2CH_3$ |
| $SO_3H$ | H | $NO_2$ | $CH_3$ | $NHSO_2CH_3$ |
| $SO_3H$ | H | $SO_3H$ | H | $NHSO_2CH_3$ |
| H | H | $SO_3H$ | $OCH_3$ | $NHSO_2CH_3$ |
| H | $SO_3H$ | H | $OCH_3$ | $NHSO_2CH_3$ |
| $SO_3H$ | H | H | $OCH_3$ | $NHSO_2CH_3$ |
| $SO_3H$ | H | $NO_2$ | $OCH_3$ | $NHSO_2CH_3$ |
| $SO_3H$ | H | $SO_3H$ | $OCH_3$ | $NHSO_2CH_3$ |
| H | H | $SO_3H$ | Cl | $NHSO_2CH_3$ |
| H | $SO_3H$ | H | Cl | $NHSO_2CH_3$ |
| $SO_3H$ | H | H | Cl | $NHSO_2CH_3$ |
| $SO_3H$ | H | $NO_2$ | Cl | $NHSO_2CH_3$ |
| $SO_3H$ | H | $SO_3H$ | Cl | $NHSO_2CH_3$ |
| H | H | $SO_3H$ | H | $NHSO_2N(CH_3)_2$ |
| H | $SO_3H$ | H | H | $NHSO_2N(CH_3)_2$ |
| $SO_3H$ | H | H | H | $NHSO_2N(CH_3)_2$ |
| $SO_3H$ | H | $NO_2$ | H | $NHSO_2N(CH_3)_2$ |
| $SO_3H$ | H | $SO_3H$ | H | $NHSO_2N(CH_3)_2$ |

Fortsetzung

| $A^1$ | $A^2$ | $A^3$ | $T^4$ | $T^5$ |
|---|---|---|---|---|
| H | H | $SO_3H$ | H | 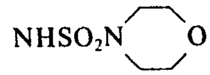 |
| H | $SO_3H$ | H | H | 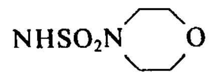 |
| $SO_3H$ | H | H | H | 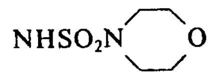 |
| $SO_3H$ | H | $NO_2$ | H | 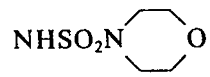 |
| $SO_3H$ | H | $SO_3H$ | H | 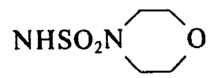 |
| H | H | $SO_3H$ | H | $NHSO_2CH_2—CH=CH_2$ |
| H | $SO_3H$ | H | H | $NHSO_2CH_2—CH=CH_2$ |
| $SO_3H$ | H | H | H | $NHSO_2CH_2—CH=CH_2$ |
| $SO_3H$ | H | $NO_2$ | H | $NHSO_2CH_2—CH=CH_2$ |
| $SO_3H$ | H | $SO_3H$ | H | $NHSO_2CH_2—CH=CH_2$ |

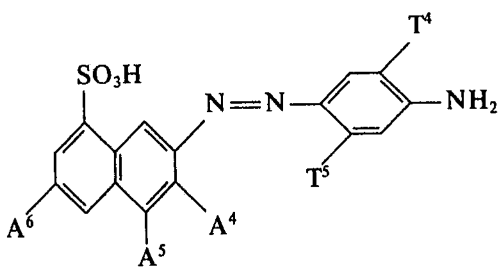

| $A^4$ | $A^5$ | $A^6$ | $T^4$ | $T^5$ |
|---|---|---|---|---|
| H | $SO_3H$ | H | H | $NHSO_2CH_3$ |
| $SO_3H$ | H | $SO_3H$ | H | $NHSO_2CH_3$ |
| H | $SO_3H$ | $SO_3H$ | H | $NHSO_2CH_3$ |
| H | $SO_3H$ | H | $CH_3$ | $NHSO_2CH_3$ |
| $SO_3H$ | H | $SO_3H$ | $CH_3$ | $NHSO_2CH_3$ |
| H | $SO_3H$ | $SO_3H$ | $CH_3$ | $NHSO_2CH_3$ |
| H | $SO_3H$ | H | $OCH_3$ | $NHSO_2CH_3$ |
| $SO_3H$ | H | $SO_3H$ | $OCH_3$ | $NHSO_2CH_3$ |

Fortsetzung

| $A^4$ | $A^5$ | $A^6$ | $T^4$ | $T^5$ |
|---|---|---|---|---|
| H | $SO_3$ | $SO_3$ | $OCH_3$ | $NHSO_2CH_3$ |
| H | $SO_3H$ | H | Cl | $NHSO_2CH_3$ |
| $SO_3H$ | H | $SO_3H$ | Cl | $NHSO_2CH_3$ |
| H | $SO_3H$ | $SO_3H$ | Cl | $NHSO_2CH_3$ |
| H | $SO_3H$ | H | H | $NHSO_2N(CH_3)_2$ |
| $SO_3H$ | H | $SO_3H$ | H | $NHSO_2N(CH_3)_2$ |
| H | $SO_3H$ | $SO_3H$ | H | $NHSO_2N(CH_3)_2$ |
| H | $SO_3H$ | H | H | $NHSO_2$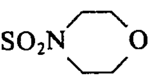 |
| $SO_3H$ | H | $SO_3H$ | H | $NHSO_2$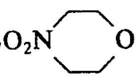 |
| H | $SO_3H$ | $SO_3H$ | H | $NHSO_2$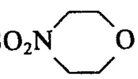 |
| H | $SO_3H$ | H | H | $NHSO_2CH_2{-}CH{=}CH_2$ |
| $SO_3H$ | H | $SO_3H$ | H | $NHSO_2CH_2{-}CH{=}CH_2$ |
| H | $SO_3H$ | $SO_3H$ | H | $NHSO_2CH_2{-}CH{=}CH_2$ |

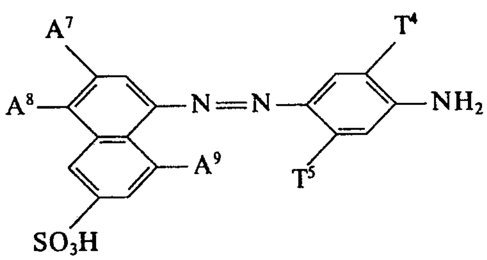

| $A^7$ | $A^8$ | $A^9$ | $T^4$ | $T^5$ |
|---|---|---|---|---|
| $SO_3H$ | H | H | H | $NHSO_2CH_3$ |
| $SO_3H$ | H | $SO_3H$ | H | $NHSO_2CH_3$ |
| H | $SO_3H$ | $SO_3H$ | H | $NHSO_2CH_3$ |
| $SO_3H$ | H | H | $CH_3$ | $NHSO_2CH_3$ |
| $SO_3H$ | H | $SO_3H$ | $CH_3$ | $NHSO_2CH_3$ |
| H | $SO_3H$ | $SO_3H$ | $CH_3$ | $NHSO_2CH_3$ |

Fortsetzung

| $A^7$ | $A^8$ | $A^9$ | $T^4$ | $T^5$ |
|---|---|---|---|---|
| $SO_3H$ | H | H | $OCH_3$ | $NHSO_2CH_3$ |
| $SO_3H$ | H | $SO_3H$ | $OCH_3$ | $NHSO_2CH_3$ |
| H | $SO_3H$ | $SO_3H$ | $OCH_3$ | $NHSO_2CH_3$ |
| $SO_3H$ | H | H | Cl | $NHSO_2CH_3$ |
| $SO_3H$ | H | $SO_3H$ | Cl | $NHSO_2CH_3$ |
| H | $SO_3H$ | $SO_3H$ | Cl | $NHSO_2CH_3$ |
| $SO_3H$ | H | H | H | $NHSO_2N(CH_3)_2$ |
| $SO_3H$ | H | $SO_3H$ | H | $NHSO_2N(CH_3)_2$ |
| H | $SO_3H$ | $SO_3H$ | H | $NHSO_2N(CH_3)_2$ |
| $SO_3H$ | H | H | H | $NHSO_2$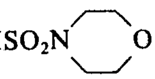 |
| $SO_3H$ | H | $SO_3H$ | H | $NHSO_2$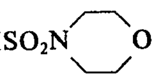 |
| H | $SO_3H$ | $SO_3H$ | H | $NHSO_2$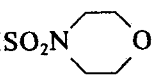 |
| $SO_3H$ | H | H | H | $NHSO_2CH_2—CH=CH_2$ |
| $SO_3H$ | H | $SO_3H$ | H | $NHSO_2CH_2—CH=CH_2$ |
| H | $SO_3H$ | $SO_3H$ | H | $NHSO_2CH_2—CH=CH_2$ |

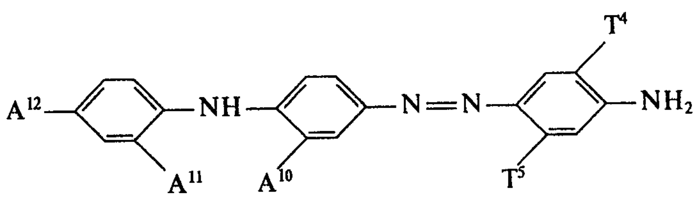

| $A^{10}$ | $A^{11}$ | $A^{12}$ | $T^4$ | $T^5$ |
|---|---|---|---|---|
| $SO_3H$ | H | H | H | $NHSO_2CH_3$ |
| $SO_3H$ | H | H | $CH_3$ | $NHSO_2CH_3$ |
| $SO_3H$ | H | H | $OCH_3$ | $NHSO_2CH_3$ |
| $SO_3H$ | H | H | Cl | $NHSO_2CH_3$ |
| $SO_3H$ | H | H | H | $NHSO_2N(CH_3)_2$ |

Fortsetzung

| $A^{10}$ | $A^{11}$ | $A^{12}$ | $T^4$ | $T^5$ |
|---|---|---|---|---|
| $SO_3H$ | H | H | H | $NHSO_2$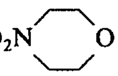 |
| $SO_3H$ | H | H | H | $NHSO_2CH_2—CH{=}CH_2$ |
| H | $SO_3H$ | $NO_2$ | H | $NHSO_2CH_3$ |
| H | $SO_3H$ | $NO_2$ | $CH_3$ | $NHSO_2CH_3$ |
| H | $SO_3H$ | $NO_2$ | $OCH_3$ | $NHSO_2CH_3$ |
| H | $SO_3H$ | $NO_2$ | Cl | $NHSO_2CH_3$ |
| H | $SO_3H$ | $NO_2$ | H | $NHSO_2N(CH_3)_2$ |
| H | $SO_3H$ | $NO_2$ | H | $NHSO_2$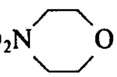 |
| H | $SO_3H$ | $NO_2$ | H | $NHSO_2CH_2—CH{=}CH_2$ |

Aus den US-Patentschriften 2 080 191 und 2 454 683 sind Farbstoffe bekannt, die gleiche Mittelkomponenten (m-Phenylendiamin und Resorcin) aufweisen, jedoch weichen sie in der weiteren Struktur stark ab, insbesondere fehlt die $NHSO_2R^2$-Gruppierung.

## Beispiel 1

18,6 Teile 3-Methylsulfonylamino-anilin werden in 50 Volumenteilen 5 N Salzsäure mit einer wäßrigen Lösung von 7 Teilen Natriumnitrit umgesetzt. Zur Diazolösung läßt man anschließend eine neutrale wäßrige Lösung von 22,3 Teilen 1-Naphthylamin-6-sulfonsäure langsam zulaufen. Nach Beendigung der Kupplung wird das erhaltene Produkt abgesaugt, in verdünnter Natronlauge gelöst und nach Zugabe einer wäßrigen Lösung von 7 Teilen Natriumnitrit bei 0—5°C mit verdünnter Salzsäure sauer gestellt. Nach beendeter Diazotierung wird die Mischung anschließend in eine wäßrige Suspension der Verbindung eingegossen, die man auf übliche Weise durch Diazotierung von 23,4 Teilen 2-Hydroxy-3-amino-5-nitro-benzolsulfonsäure und nachfolgende sodaalkalische Kupplung auf 11 Teile Resorcin erhält. Die Kupplung wird im alkalischen Bereich zu Ende geführt und der erhaltene Farbstoff wird dann bei 60—70°C in 500 Teilen Wasser mit 34 Teilen Eisen-III-chlorid bei pH 4 komplexiert. Der Metallkomplex wird bei 60°C bei pH 1—2 mit Kaliumchlorid ausgesalzen, heiß filtriert und getrocknet. Der Eisenkomplex der Verbindung der Formel

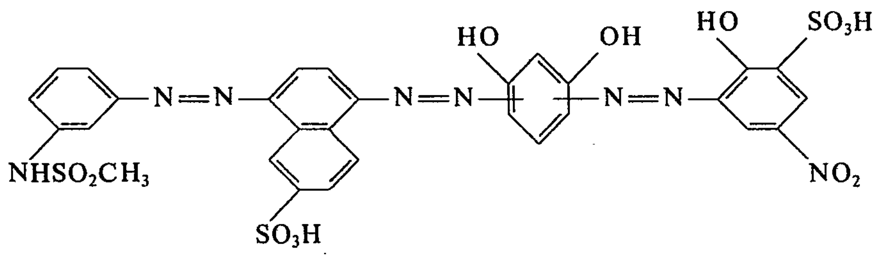

färbt Leder in licht- und naßechten rotbraunen Tönen.

## Beispiel 2

18,6 Teile 4-Methylsulfonylamino-anilin werden in 100 Volumenteilen 5 N Salzsäure gelöst und bei 0—5°C mit einer wäßrigen Lösung von 7 Teilen Natriumnitrit versetzt. Zur Diazolösung läßt man anschließend eine wäßrige Lösung von 22,3 Teilen 1-Naphthylamin-6-sulfonsäure zulaufen und diazotiert nach beendeter Kupplung das erhaltene Produkt analog Beispiel 1. Danach wird die erhaltene Diazosuspension in eine Suspension des Kupplungsproduktes aus 29,5 Teilen 6-Nitro-1-diazo-2-naphthol-4-sulfonsäure und 11 Teilen Resorcin eingerührt und auf pH 9 gestellt. Nach beendeter Kupplung wird wie üblich bei pH 4 mit 34 Teilen Eisen-III-chlorid umgesetzt und nach erfolgter Metallisierung wie zuvor beschrieben aufgearbeitet. Man erhält den Eisenkomplex der Verbindung der Formel

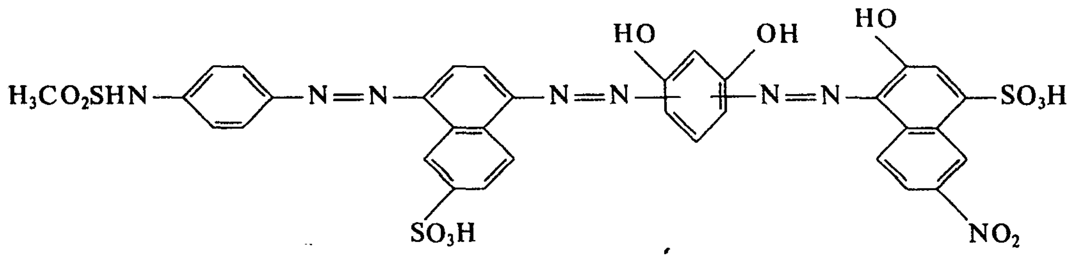

mit dem auf Leder rotbraune Färbungen mit guter Licht- und Naßechtheit erzielt werden.

Analog zu den beschriebenen Methoden erhält man auch die in der folgenden Tabelle gekennzeichneten Verbindungen:

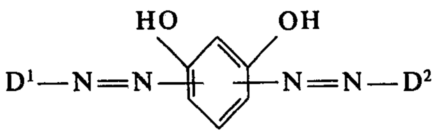

Fe-Komplex

| Beisp. Nr. | $D^1$ | $D^2$ | Färbung auf Leder |
|---|---|---|---|
| 3 | 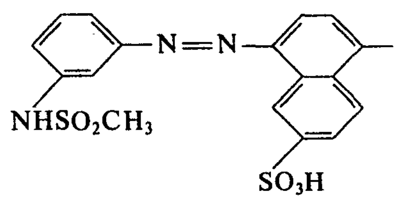 | 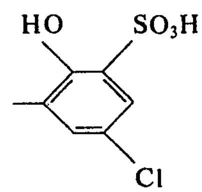 | braun |
| 4 | desgl. | 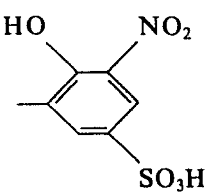 | braun |
| 5 | desgl. | 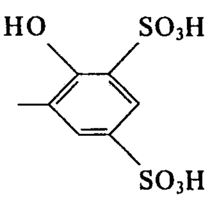 | braun |
| 6 | 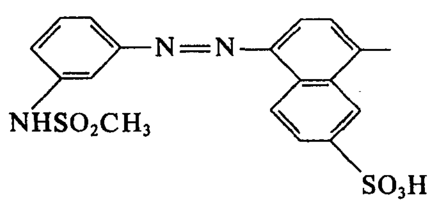 | 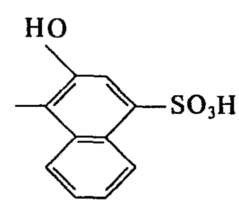 | braun |

Fortsetzung

| Beisp. Nr. | $D^1$ | $D^2$ | Färbung auf Leder |
|---|---|---|---|
| 7 | 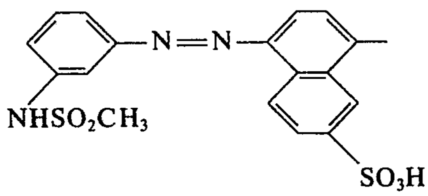 | 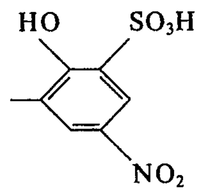 | braun |
| 8 | 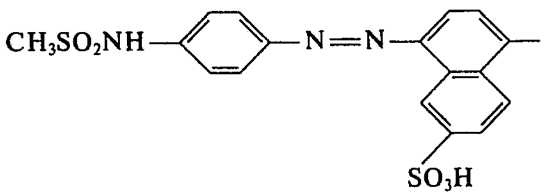 | 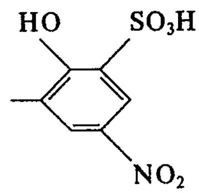 | braun |
| 9 | desgl. | 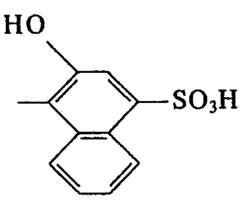 | braun |
| 10 | 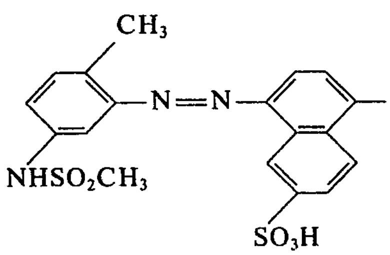 | 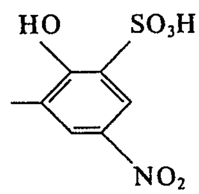 | braun |
| 11 | desgl. | 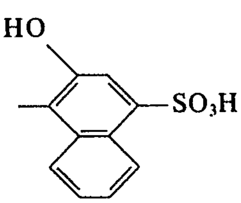 | braun |
| 12 | 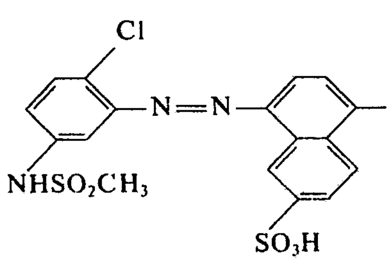 | 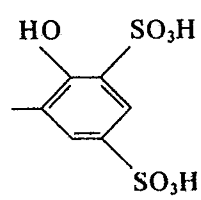 | braun |

Fortsetzung

| Beisp. Nr. | $D^1$ | $D^2$ | Färbung auf Leder |
|---|---|---|---|
| 13 | 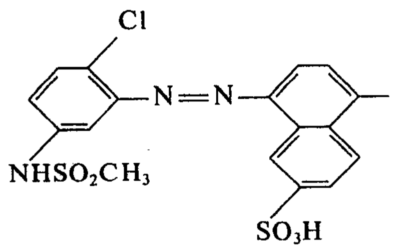 | 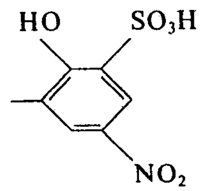 | braun |
| 14 | 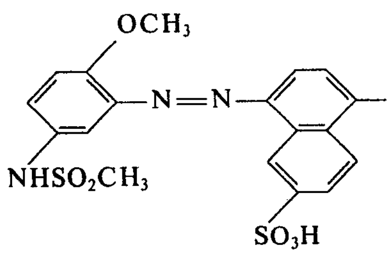 | 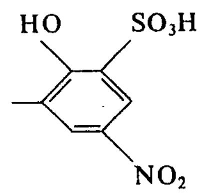 | braun |
| 15 | 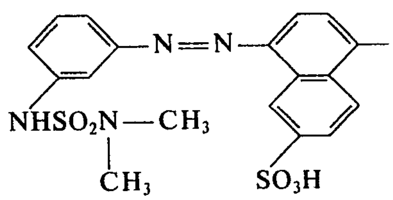 | desgl. | braun |
| 16 | 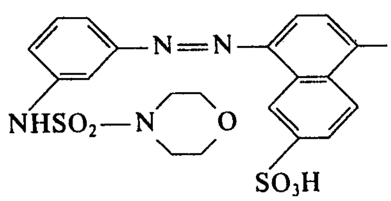 | desgl. | braun |
| 17 | 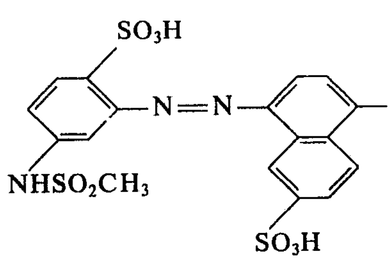 | 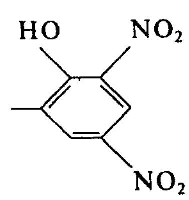 | braun |
| 18 | desgl. | 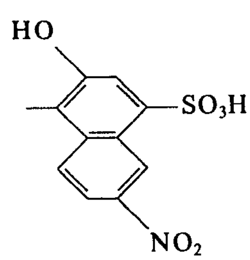 | braun |

Fortsetzung

| Beisp. Nr. | $D^1$ | $D^2$ | Färbung auf Leder |
|---|---|---|---|
| 19 | 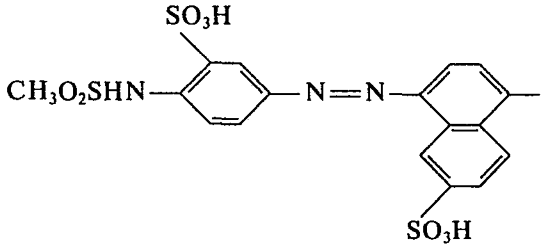 | 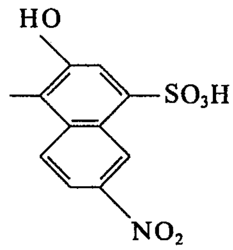 | braun |
| 20 | 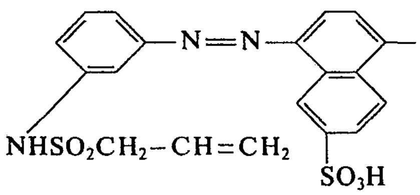 | 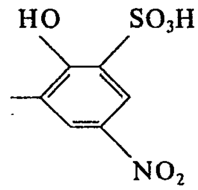 | braun |

Beispiel 21

21,8 Teile 2-Amino-5-nitro-benzolsulfonsäure werden wie üblich diazotiert und die Diazolösung wird zu einer Lösung von 18,6 Teilen 3-Methylsulfonylaminoanilin in 50 Volumenteilen 5 N Salzsäure zugegeben. Nach erfolgter Kupplung wird das Kupplungsprodukt diazotiert und die Diazosuspension bei pH 9 in die Suspension des Kupplungsprodukts aus 23,4 Teilen diazotierter 2-Hydroxy-3-amino-5-nitrobenzolsulfonsäure und 11 Teilen Resorcin eingegossen. Nach Beendigung der Kupplung wird wie beschrieben mit 34 Teilen Eisen-III-chlorid bei pH 4 komplexiert und der Metallkomplex der Verbindung der Formel

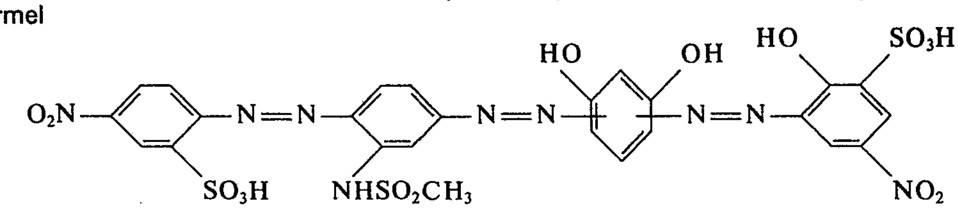

isoliert und getrocknet. Er färbt Leder in licht- und naßechten rotbraunen Tönen.

Analog zu der beschriebenen Methode erhält man auch die in der folgenden Tabelle gekennzeichneten Verbindungen:

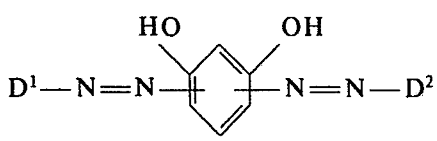

Fe-Komplex

| Beisp. Nr. | $D^1$ | $D^2$ | Färbung auf Leder |
|---|---|---|---|
| 22 | 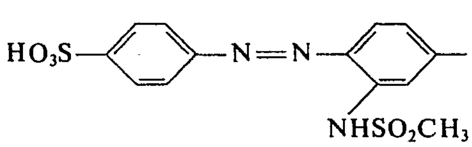 | 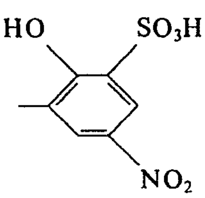 | braun |

Fortsetzung

| Beisp. Nr. | $D^1$ | $D^2$ | Färbung auf Leder |
|---|---|---|---|
| 23 | 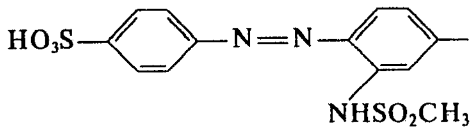 | 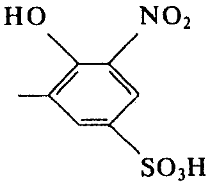 | braun |
| 24 | desgl. | 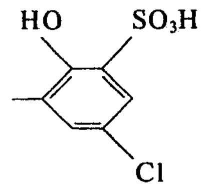 | braun |
| 25 | 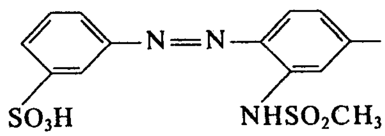 | 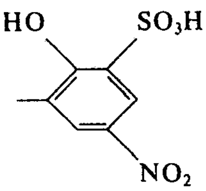 | braun |
| 26 | 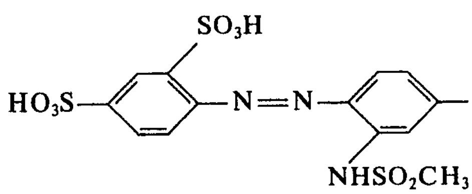 | 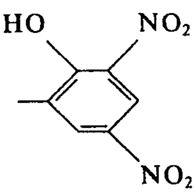 | braun |
| 27 | 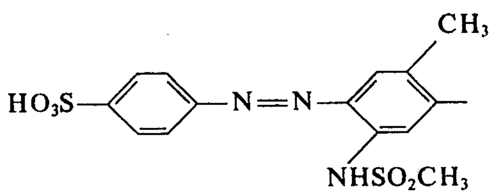 | 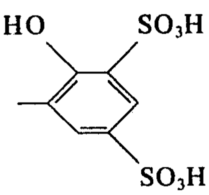 | braun |
| 28 | desgl. | 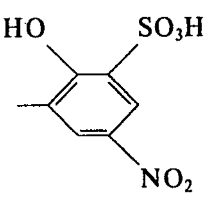 | braun |
| 29 | 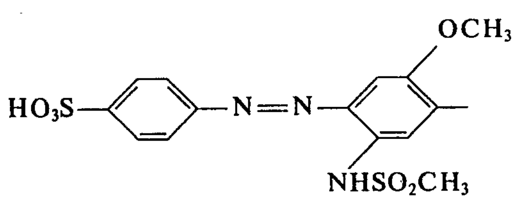 | 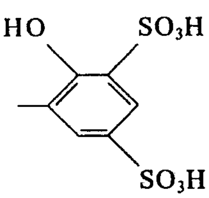 | braun |

Fortsetzung

| Beisp. Nr. | $D^1$ | $D^2$ | Färbung auf Leder |
|---|---|---|---|
| 30 | 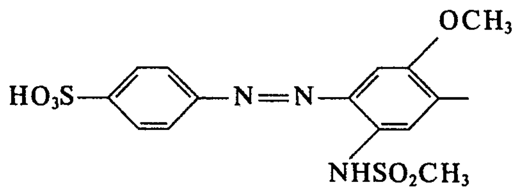 | 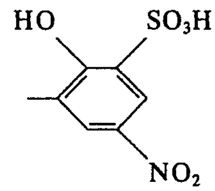 | braun |
| 31 | 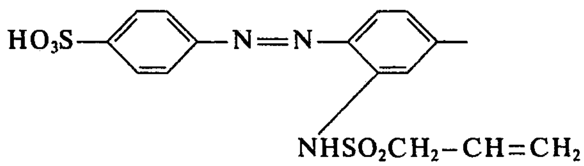 | desgl. | braun |
| 32 | 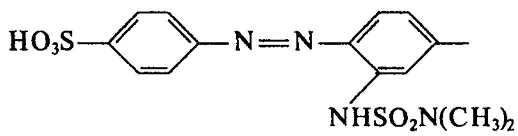 | 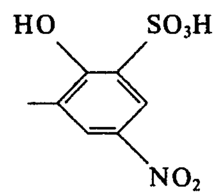 | braun |
| 33 | 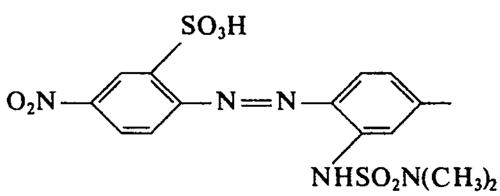 | desgl. | braun |
| 34 | 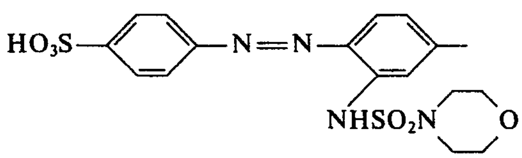 | 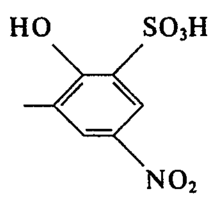 | braun |
| 35 | desgl. | 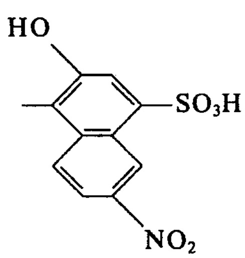 | braun |
| 36 | 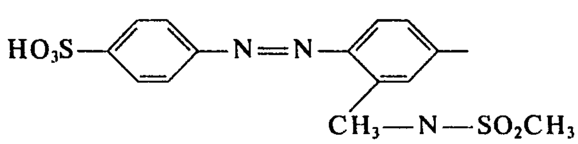 | 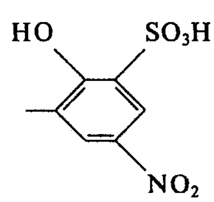 | braun |

Fortsetzung

| Beisp. Nr. | $D^1$ | $D^2$ | Färbung auf Leder |
|---|---|---|---|
| 37 | 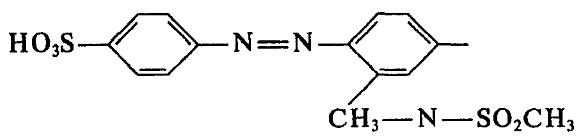 | 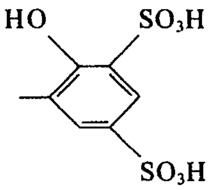 | braun |

### Beispiel 38

30,3 Teile 1-Naphthylamin-3,6-disulfonsäure werden in der üblichen Weise diazotiert. Die erhaltene Diazolösung wird in eine salzsaure Lösung von 18,6 Teilen 3-Methylsulfonylamino-anilin eingerührt und danach mit Natriumacetat auf pH 2 gestellt. Nach Beendigung der Kupplung wird die erhaltene Verbindung in verdünnter Natronlauge gelöst, mit einer wäßrigen Lösung von 7 Teilen Natriumnitrit versetzt und bei 0—5°C in überschüssige Salzsäure eingegossen. Die resultierende Diazolösung wird anschließend in die wäßrige Suspension der Verbindung, die durch übliche sodaalkalische Kupplung von 29,5 Teilen 6-Nitro-1-diazo-2-naphthol-4-sulfonsäure auf 11 Teile Resorcin erhalten wurde, eingegossen und auf pH 8—9 gestellt. Der erhaltene Farbstoff wird in wäßriger Suspension bei 60—70°C und pH 4 mit 34 Teilen Eisen-III-chlorid bis zur vollständigen Komplexierung gerührt und danach bei pH 1 mit Kaliumchlorid ausgesalzen, isoliert und getrocknet. Der Eisenkomplex der Formel

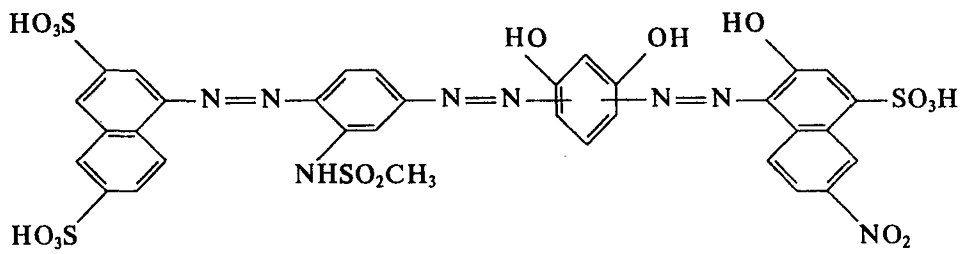

färbt Leder in dunkelbraunen Tönen von guter Licht- und Naßechtheit.

### Beispiel 39

19,9 Teile 2-Amino-4,6-dinitrophenol werden in üblicher Weise diazotiert und auf 11 Teile Resorcin sodaalkalisch gekuppelt. Zu der erhaltenen Verbindung wird die in Beispiel 38 beschriebene Diazoverbindung des aus 30,0 Teilen 1-Naphthylamin-3,6-disulfonsäure und 18,6 Teilen 3-Methylsulfonylamino-anilin gebildeten Kupplungsprodukts gegeben und nach Beendigung der sodaalkalischen Kupplung wird das Reaktionsprodukt bei pH 4 mit 34 Teilen Eisen-III-chlorid umgesetzt. Der wie üblich isolierte Eisenkomplex der Verbindung der Formel

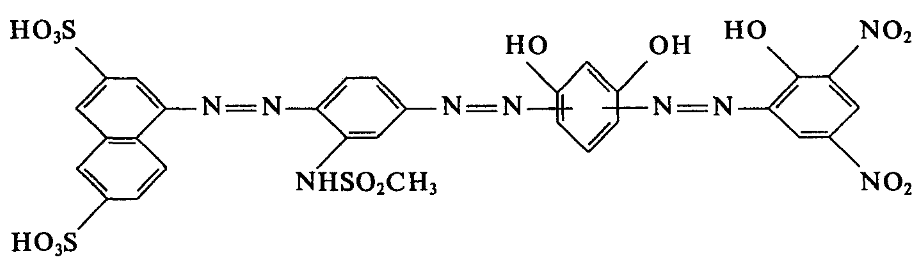

ergibt auf Leder gut licht- und naßechte tiefbraune Färbungen.

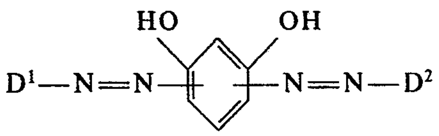

Fe-Komplex

| Beisp. Nr. | $D^1$ | $D^2$ | Färbung auf Leder |
|---|---|---|---|
| 40 | 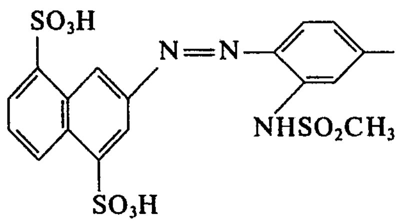 | 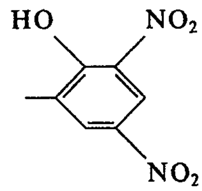 | dunkelbraun |
| 41 | 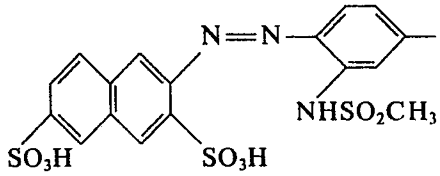 | desgl. | dunkelbraun |
| 42 | 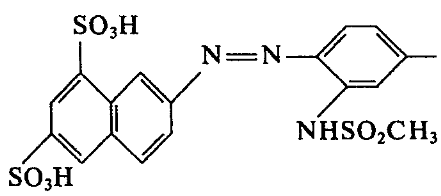 | desgl. | dunkelbraun |
| 43 | 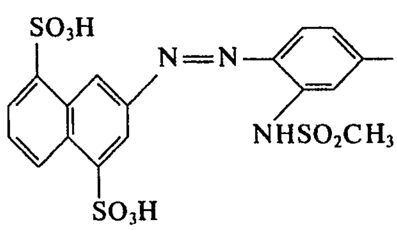 | 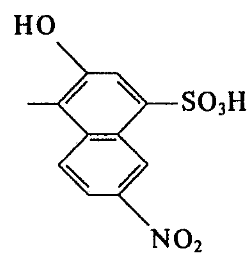 | dunkelbraun |
| 44 | 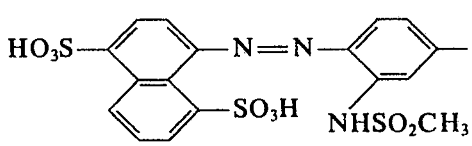 | 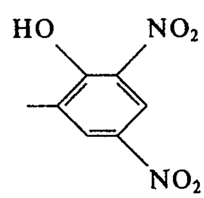 | dunkelbraun |
| 45 | 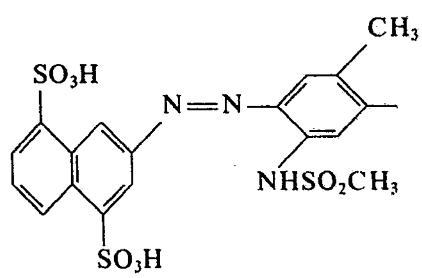 | 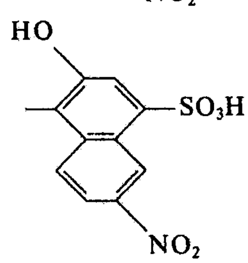 | dunkelbraun |

Fortsetzung

| Beisp. Nr. | $D^1$ | $D^2$ | Färbung auf Leder |
|---|---|---|---|
| 46 | 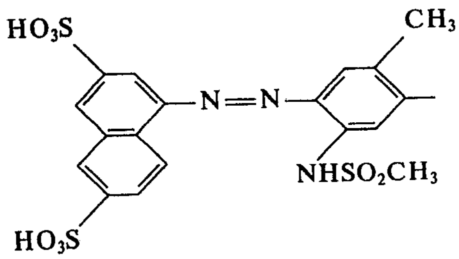 | 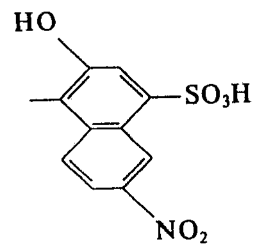 | dunkelbraun |
| 47 | 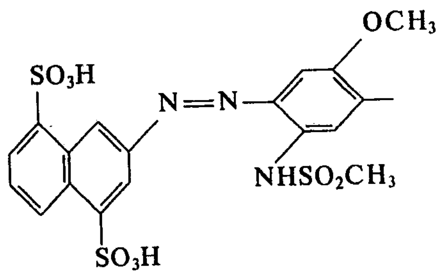 | 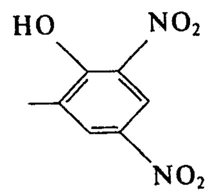 | dunkelbraun |
| 48 | desgl. | 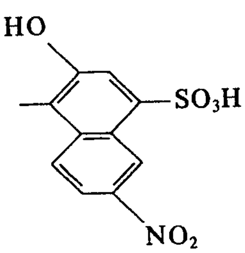 | dunkelbraun |
| 49 | 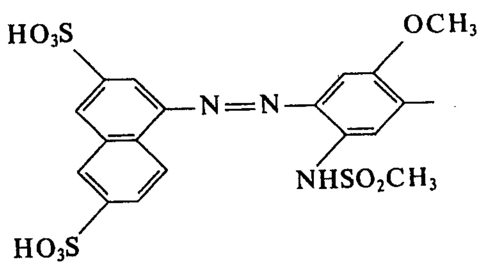 | desgl. | dunkelbraun |
| 50 | 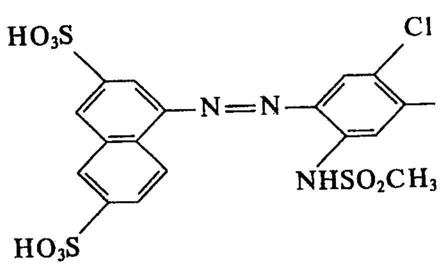 | desgl. | dunkelbraun |
| 51 | 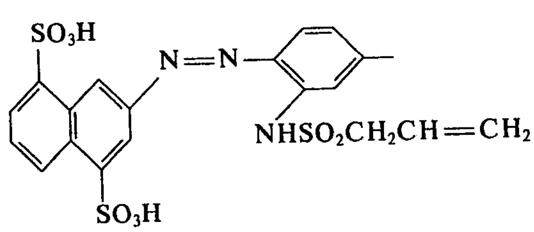 | desgl. | dunkelbraun |

Fortsetzung

| Beisp. Nr. | $D^1$ | $D^2$ | Färbung auf Leder |
|---|---|---|---|
| 52 | 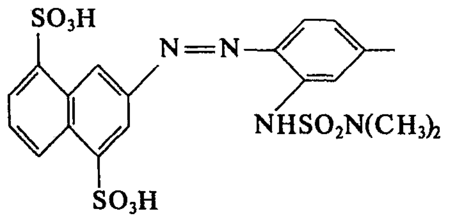 | desgl. | dunkelbraun |
| 53 | 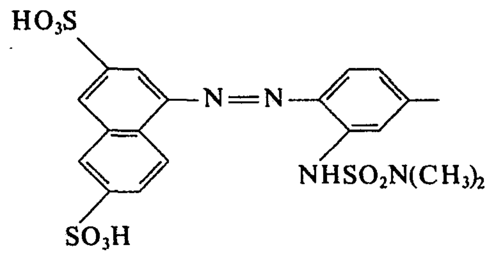 | 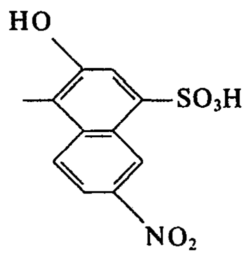 | dunkelbraun |
| 54 | 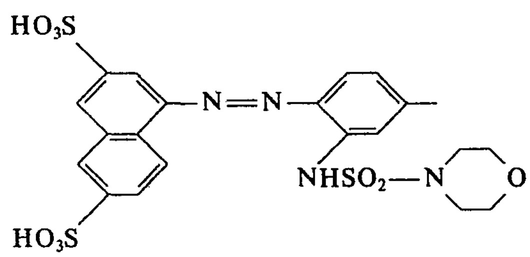 | desgl. | dunkelbraun |

Beispiel 55

34,7 Teile 2-Naphthylamin-3,6,8-trisulfonsäure werden wie üblich diazotiert und die Diazolösung wird in eine Suspension von 20 Teilen 2-Methyl-5-methylsulfonylamino-anilin in 100 Teilen 5 N Salzsäure eingerührt. Das Reaktionsprodukt wird wie in Beispiel 38 beschrieben weiter diazotiert und die Diazoverbindung bei pH 9—10 auf das aus 19,9 Teilen 2-Amino-4,6-dinitrophenol und 11 Teilen Resorcin erhaltene Produkt aufgekuppelt. Komplexierung mit Fe-III-chlorid liefert auf dem beschriebenen Weg den Eisenkomplex der Verbindung der Formel

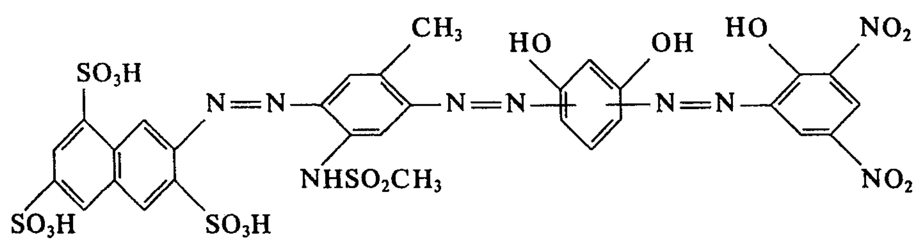

der auf Leder tiefbraune Färbungen von guter Licht- und Naßechtheit ergibt.

Analog zu der beschriebenen Methode erhält man auch die in der folgenden Tabelle gekennzeichneten Verbindungen:

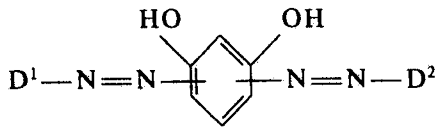

Fe-Komplex

| Beisp. Nr. | $D^1$ | $D^2$ | Färbung auf Leder |
| --- | --- | --- | --- |
| 56 | 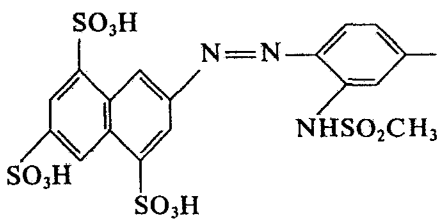 | 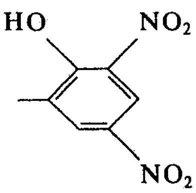 | dunkelbraun |
| 57 | 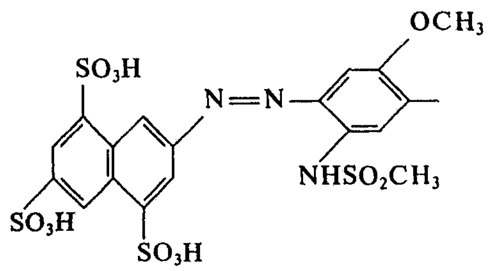 | desgl. | dunkelbraun |
| 58 | 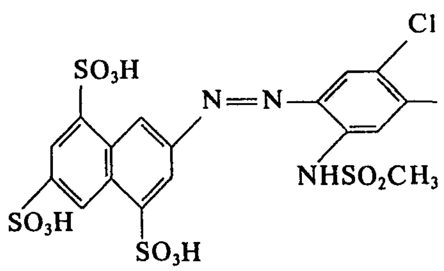 | desgl. | braun |

Beispiel 59

27,7 Teile 4-Nitro-4'-amino-diphenylamin-2-sulfonsäure werden wie üblich diazotiert und mit einer salzsauren Lösung von 3-Methylsulfonylamino-anilin vereinigt. Anschließend erhöht man den pH auf 6,5. Nach beendeter Kupplung wird die erhaltene Verbindung in alkalischer Lösung mit 7 Teilen Natriumnitrit versetzt und in überschüssige verdünnte Salzsäure rasch eingegossen. Die resultierende Diazoverbindung wird in eine Suspension der durch sodaalkalische Kupplung von 29,5 Teilen 6-Nitro-1-diazo-2-naphthol-4-sulfonsäure auf 11 Teile Resorcin erhaltenen Verbindung eingerührt und bei pH 9 bis zur beendeten Kupplung nachgerührt. Anschließend werden bei pH 4 34 Teile Eisen-III-chlorid zugegeben und bei 60—70°C wird 1 Stunde gerührt. Nach erfolgter Metallisierung wird bei pH 1—2 mit Kaliumchlorid der Metallkomplex ausgesalzen, isoliert und getrocknet. Man erhält den Eisenkomplex der Verbindung der Formel

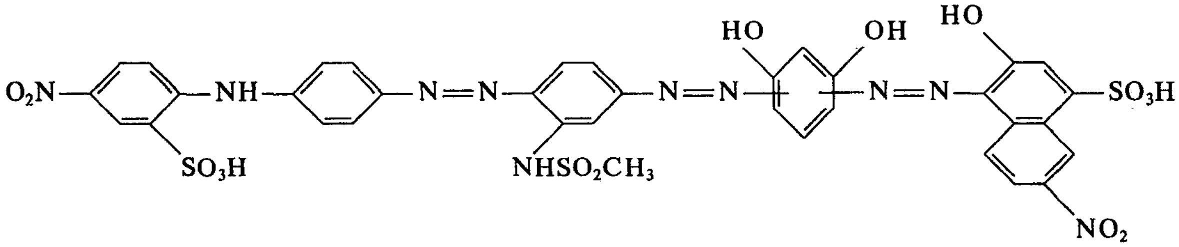

der Leder in licht- und naßechten dunkelbraunen Tönen färbt.

Analog zu der beschriebenen Methode erhält man auch die in der folgenden Tabelle gekennzeichneten Verbindungen:

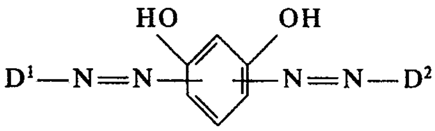

Fe-Komplex

| Beisp. Nr. | $D^1$ | $D^2$ | Färbung auf Leder |
|---|---|---|---|
| 60 | 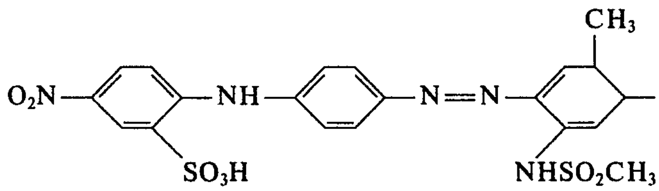 | 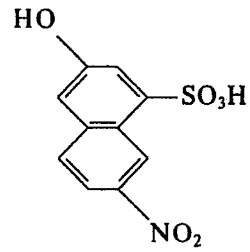 | dunkelbraun |
| 61 | desgl. | 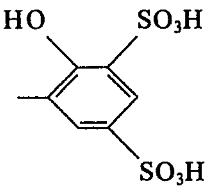 | dunkelbraun |
| 62 | 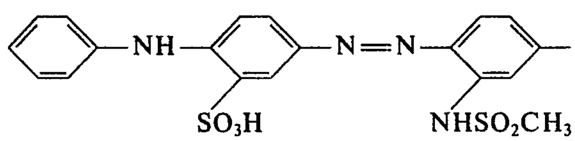 | 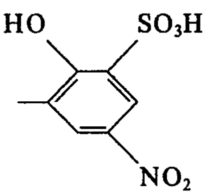 | dunkelbraun |
| 63 | desgl. | 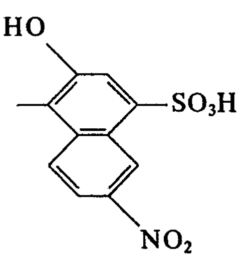 | dunkelbraun |
| 64 | 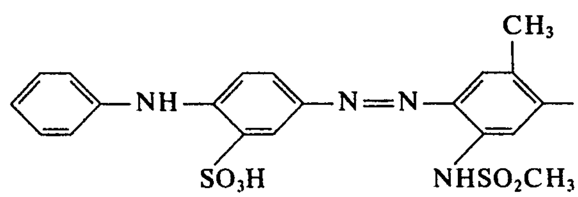 | desgl. | dunkelbraun |

Fortsetzung

| Beisp. Nr. | $D^1$ | $D^2$ | Färbung auf Leder |
|---|---|---|---|
| 65 | 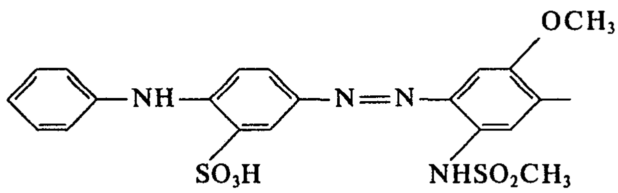 | 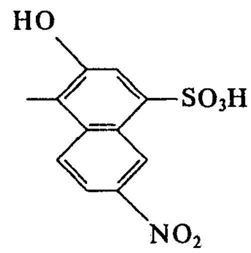 | dunkelbraun |
| 66 | 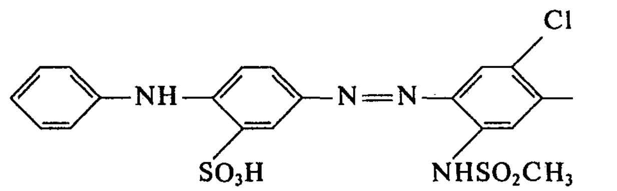 | 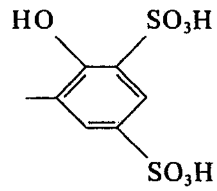 | dunkelbraun |

Beispiel 67

Analog Beispiel 38 werden 30,3 Teile 1-Naphthylamin-3,6-disulfonsäure diazotiert, auf 18,6 Teile 3-Methylsulfonylamino-anilin gekuppelt, der resultierende Monoazofarbstoff weiter diazotiert und auf das Kupplungsprodukt aus 29,5 Teilen 6-Nitro-1-diazo-2-naphthol-4-sulfonsäure aufgekuppelt. Anschließend läßt man eine auf übliche Weise aus 12,3 Teilen o-Anisidin bereitete Diazolösung bei 0–5 °C zulaufen, stellt mit $Na_2CO_3$-Lösung auf pH 9 und rührt bis zum Ende der Kupplung. Der erhaltene Farbstoff wird bei 60–70 °C mit 34 Teilen Eisen-III-chlorid komplexiert und wie üblich isoliert. Man erhält den Eisenkomplex der Verbindung der Formel

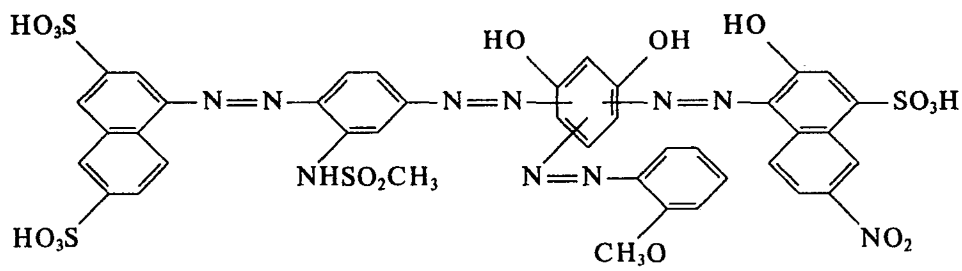

mit der auf Leder dunkelbraune Färbungen mit guter Licht- und Naßechtheit erhalten werden.

Analog zu den beschriebenen Methoden erhält man auch die in der folgenden Tabelle gekennzeichneten Verbindungen.

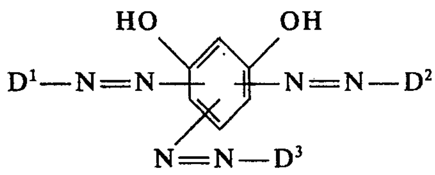

Fe-Komplex

| Beispiel Nr. | $D^1$ | $D^2$ | $D^3$ | Färbung auf Leder |
|---|---|---|---|---|
| 68 | 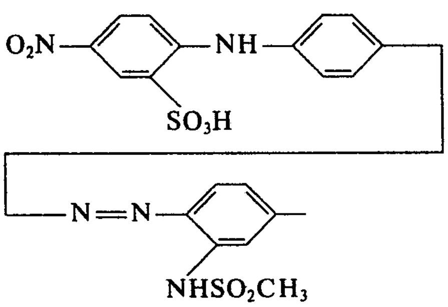 | 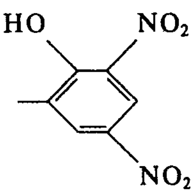 | 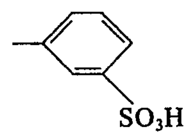 | dunkelbraun |
| 69 | desgl. | 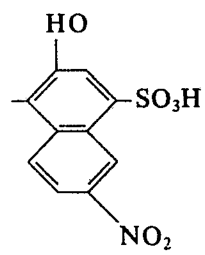 | 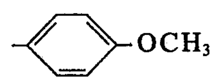 | dunkelbraun |
| 70 | 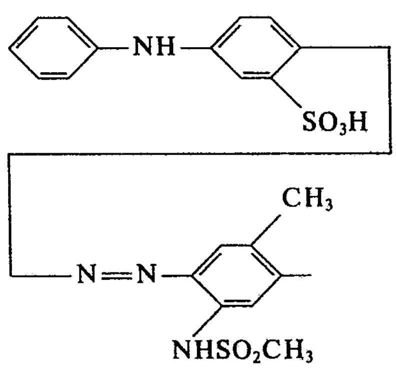 | desgl. | 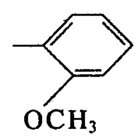 | dunkelbraun |
| 71 | desgl. | desgl. | 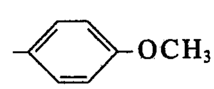 | dunkelbraun |
| 72 | desgl. | 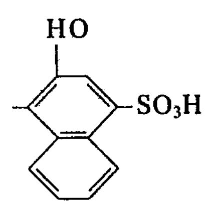 | desgl. | dunkelbraun |

**Patentansprüche**

1. Von Reaktivgruppen freie, zwei oder drei Sulfonsäuregruppen enthaltende Farbstoffe der allgemeinen Formel

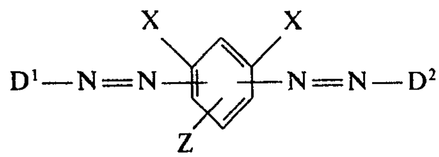

in der

$D^1$ ein Rest der Formel

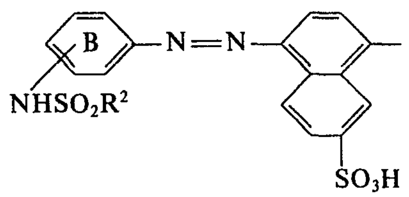

oder

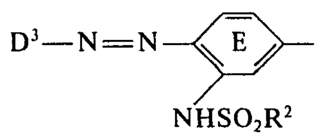

$D^2$ der Rest einer Diazokomponente, die Reste
X unabhängig voneinander Hydroxy, Amino oder substituiertes Amino und
Z Wasserstoff oder ein Rest $D^4$–N=N– sind, wobei
$D^3$ der Rest einer Diazokomponente,
$D^4$ gegebenenfalls durch Methyl, Ethyl, Methoxy, Ethoxy, Chlor, Brom, Nitro, Sulfamoyl oder Hydroxysulfonyl substituiertes Phenyl oder durch Hydroxysulfonyl substituiertes Naphthyl, und
$R^2$ ein ggf. substituierter Alkyl-, Alkenyl-, Aralkyl-, Cycloalkyl- oder aromatischer Rest oder ein substituierter Aminrest sind, und wobei die Ringe B und E noch weiter durch Methyl, Ethyl, Methoxy, Ethoxy, Chlor, Brom oder Hydroxysulfonyl substituiert sein können, mit der Maßgabe, daß $D^2$ eine zur Azobindung ortho-ständige Hydroxygruppe hat sowie die Eisen-, Mangan-, Kobalt-, Chrom-, Nickel- und Kupferkomplexe dieser Farbstoffe.

2. Farbstoffe gemäß Anspruch 1, wobei $R^2$ Methyl oder Ethyl oder N,N-di-$C_1$- bis -$C_4$-alkylsubstituiertes Amino ist.

3. Farbstoffe gemäß Anspruch 1, wobei $D^3$ durch Hydroxysulfonyl, Chlor, Brom, Methyl, Methoxy, Ethoxy, Nitro, Phenylamino, Sulfophenylamino oder Nitrosulfophenylamino substituiertes Phenyl oder Hydroxysulfonyl substituiertes Naphthyl ist.

4. Farbstoffe gemäß Anspruch 1, wobei $D^2$ durch Hydroxy, Hydroxysulfonyl, Chlor oder Nitro substituiertes Phenyl oder durch Hydroxy, Hydroxysulfonyl oder Nitro substituiertes Naphthyl ist.

5. Farbstoffe gemäß Anspruch 1, wobei Z Wasserstoff ist.

6. Farbstoffe gemäß Anspruch 1, wobei Z $D^4$–N=N– ist.

7. Farbstoffe gemäß Anspruch 1, wobei X Hydroxy ist.

8. Farbstoffe gemäß Anspruch 1 der Formel

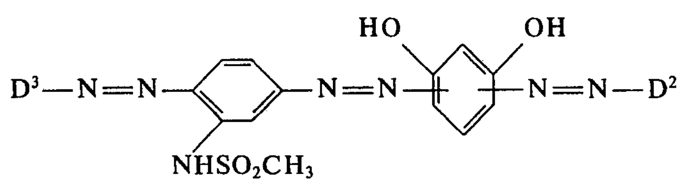

in der $D^2$ und $D^3$ die für Anspruch 3 bzw. 4 angegebene Bedeutung haben und der Ring E durch Methyl oder Hydroxysulfonyl substituiert sein kann.

9. Farbstoffe gemäß Anspruch 1 in Form der Fe-Komplexe.

10. Der Farbstoff gemäß Anspruch 1 der Formel

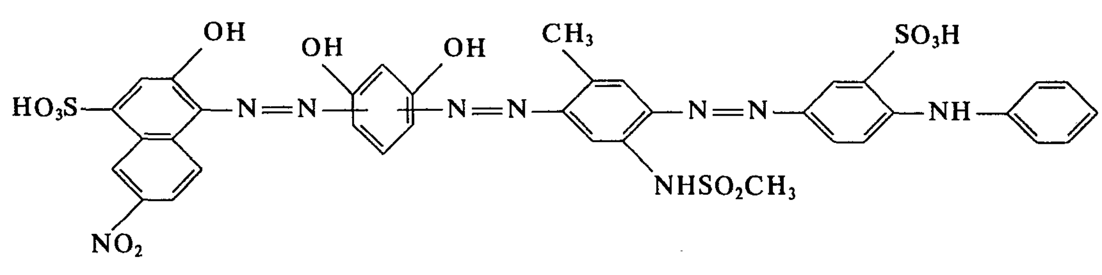

in Form des Fe-Komplexes.

11. Verwendung der Verbindungen gemäß Anspruch 1 zum Färben von stickstoffhaltigen Fasern und insbesondere Leder.

**Claims**

1. A dye, which is free of reactive groups and contains two or three sulfonic acid groups, of the general formula

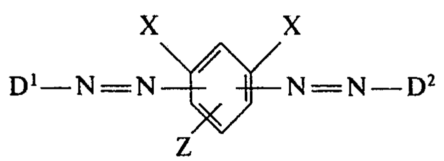

where

$D^1$ is a radical of the formula

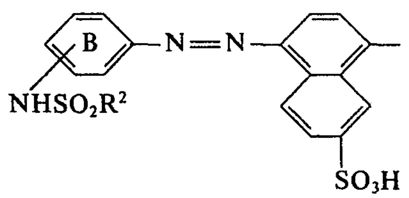

or

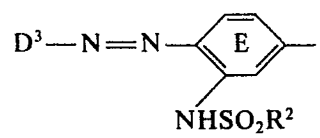

$D^2$ is the radical of a diazo component, the radicals
X independently of one another are hydroxyl, amino or substituted amino, and
Z is hydrogen or a radical of the formula
$D^4$ –N=N–,
$D^3$ is the radical of a diazo component,
$D^4$ is phenyl which is unsubstituted or substituted by methyl, ethyl, methoxy, ethoxy, chlorine, bromine, nitro, sulfamoyl or hydroxysulfonyl, or is naphthyl which is substituted by hydroxysulfonyl,
$R^2$ is an unsubstituted or substituted alkyl, alkenyl, aralkyl, cycloalkyl or aromatic radical, or a substituted amine radical, and the rings B and E may be additionally substituted by methyl, ethyl, methoxy, ethoxy, chlorine, bromine or hydroxysulfonyl, with the proviso that $D^2$ has a hydroxyl group ortho to the azo bond, and the iron, manganese, cobalt, chromium, nickel and copper complexes of this dye.

2. A dye as claimed in claim 1, where $R^2$ is methyl or ethyl, or amino which is N,N-disubstituted by $C_1$–$C_4$-alkyl.

3. A dye as claimed in claim 1, where $D^3$ is phenyl which is substituted by hydroxysulfonyl, chlorine, bromine, methyl, methoxy, ethoxy, nitro, phenylamino, sulfophenylamino or nitrosulfophenylamino, or is naphthyl which is substituted by hydroxysulfonyl.

4. A dye as claimed in claim 1, where $D^2$ is phenyl which is substituted by hydroxyl, hydroxysulfonyl, chlorine or nitro, or is naphthyl which is substituted by hydroxyl, hydroxysulfonyl or nitro.

5. A dye as claimed in claim 1, where Z is hydrogen.

6. A dye as claimed in claim 1, where Z is $D^4$–N=N–.

7. A dye as claimed in claim 1, where X is hydroxyl.

8. A dye as claimed in claim 1, of the formula

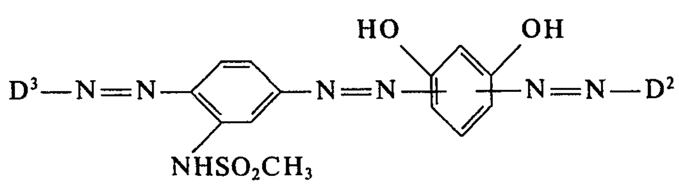

where $D^2$ and $D^3$ have the meanings given for claims 4 and 3 respectively, and the ring E may be substituted by methyl or hydroxysulfonyl.

9. A dye as claimed in claim 1, in the form of the Fe complex.

10. A dye as claimed in claim 1, of the formula

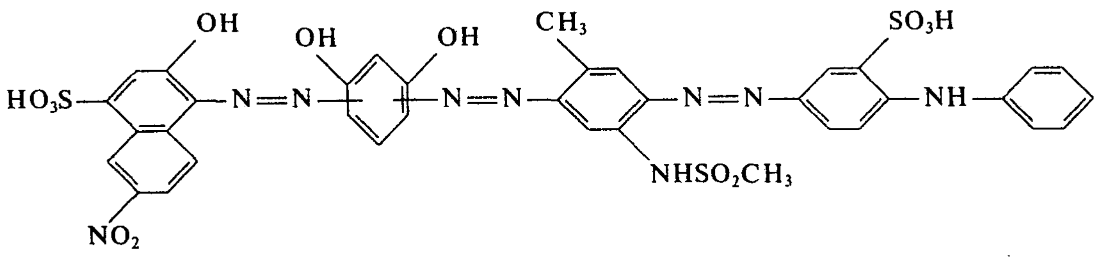

in the form of the Fe complex.

11. The use of a compound as claimed in claim 1 for dyeing nitrogen-containing fibers and especially leather.

**Revendications**

1. Colorants dépourvus de groupes réactifs, contenant deux ou trois groupes acide sulfonique, de formule générale

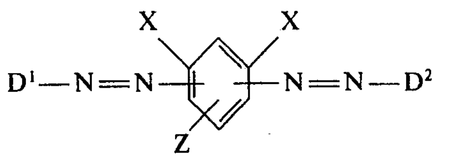

dans laquelle

$D^1$ est un radical de formule

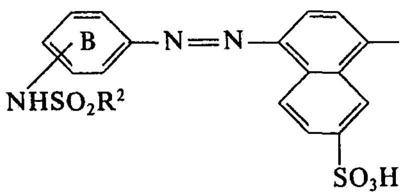

ou

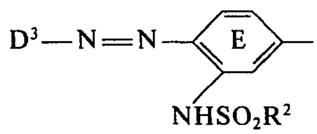

$D^2$ est le radical d'un composant de diazoïque, les radicaux

X représentent, indépendamment l'un de l'autre, des groupes hydroxy, amino ou amino substitué et

Z est un atome d'hydrogène ou un radical $D^4$–N=N–,

$D^3$ étant le radical d'un composant de diazoïque,

$D^4$ étant un phényle éventuellement substitué par un méthyle, un éthyle, un méthoxy, un éthoxy, un chlore, un brome, un nitro, un sulfamoyle ou un hydroxysulfonyle, ou un naphtyle substitué par un hydroxysulfonyle et

$R^2$ étant un radical alcoyle, alcényle, aralcoyle, cycloalcoyle oy aromatique éventuellement substitué ou un radical amine substitué, et les noyaux B et E pouvant être encore substitués par un méthyle, un éthyle, un méthoxy, un éthoxy, un chlore, un brome ou un hydroxysulfonyle, avec cette condition que $D^2$ comporte un groupe hydroxy en position ortho par rapport à la liaison azoïque, ainsi que les complexes de ces colorants avec le fer, le manganèse, le cobalt, le chrome, le nickel et le cuivre.

2. Colorants selon la revendication 1, caractérisés en ce que $R^2$ est un méthyle, un éthyle ou un radical amino N,N-bisubstitué par un alcoyle en $C_1$ à $C_4$.

3. Colorants selon la revendication 1, caractérisés en ce que $D^3$ est un phényle substitué par un hydroxysulfonyle, un chlore, un brome, un méthyle, un méthoxy, un éthoxy, un nitro, un phénylamino, un sulfophénylamino ou un nitrosulfophénylamino, ou un naphtyle substitué par un hydroxysulfonyle.

4. Colorants selon la revendication 1, caractérisés en ce que $D^2$ est un phényle substitué par un hydroxy, un hydroxysulfonyle, un chlore ou un nitro, ou un naphtyle substitué par un hydroxy, un hydroxysulfonyle ou un nitro.

5. Colorants selon la revendication 1, caractérisés en ce que Z est un hydrogène.

6. Colorants selon la revendication 1, caractérisés en ce que Z est mis pour $D^4$–N=N–.

7. Colorants selon la revendication 1, caractérisés en ce que X est un hydroxy.

8. Colorants selon la revendication 1 de formule

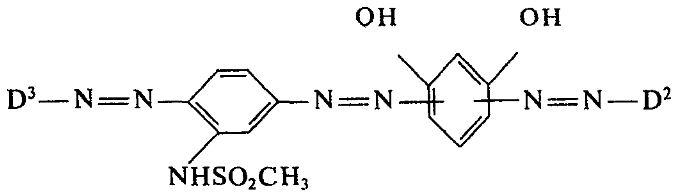

dans laquelle:
$D^2$ et $D^3$ ont les significations à propos de la revendication 3 ou 4 et le noyau E peut être substitué par un méthyle ou un hydroxysulfonyle.

9. Colorants selon la revendication 1 sous la forme de complexes de fer.

10. Colorant selon la revendication 1 de formule

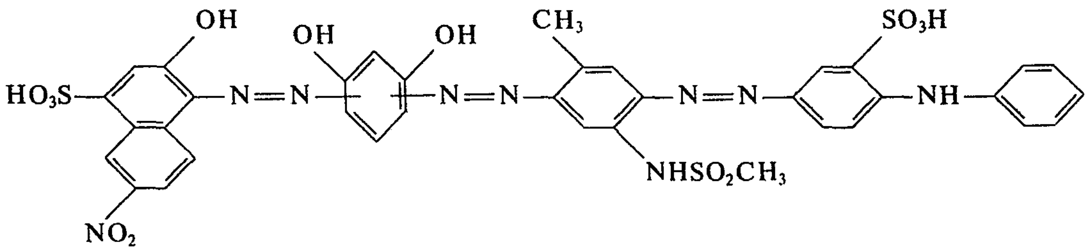

sous forme de complexe de fer.

11. Utilisation des composés selon la revendication 1 pour la teinture de fibres azotées et, en particulier, de cuirs.